# EUROPÄISCHE PATENTSCHRIFT

(11) **EP 1 981 737 B1**
(45) Veröffentlichungstag und Bekanntmachung des Hinweises auf die Patenterteilung: **21.03.2012**
(21) Anmeldenummer: 06830272.8
(22) Anmeldetag: 01.12.2006
(51) Int. Cl.: B60R 21/045, B62D 25/14, B62D 21/15

(54) **ENERGIEABSORPTIONSKÖRPER, VORRICHTUNG ZUM SCHUTZ GEGEN EINEN AUFPRALL, KRAFTFAHRZEUG-INNENVERKLEIDUNGSTEIL UND QUERTRÄGER**
ENERGY-ABSORPTION ELEMENT, DEVICE FOR PROTECTING AGAINST AN IMPACT, MOTOR VEHICLE INNER PANNELLING COMPONENT AND CROSSMEMBER
CORPS D ABSORPTION D ÉNERGIE, DISPOSITIF DE PROTECTION CONTRE UNE COLLISION, ÉLÉMENT D HABILLAGE INTÉRIEUR POUR VÉHICULE AUTOMOBILE ET TRAVERSE

(30) Priorität: 27.01.2006 DE 102006004141
(43) Veröffentlichungstag der Anmeldung: 22.10.2008
(73) Patentinhaber: Faurecia Innenraum Systeme GmbH, 76767 Hagenbach (DE)
(72) Erfinder: GAVRILOV, Christo, 80636 München (DE)
(74) Vertreter: Richardt Patentanwälte
(86) Internationale Anmeldenummer: PCT/EP2006/069205
(87) Internationale Veröffentlichungsnummer: WO 2007/085314

(56) Entgegenhaltungen:
- EP-A- 0 816 179
- EP-A2- 0 230 611
- WO-A-03/045763
- DE-A1- 3 038 252
- GB-A- 2 150 075

## Beschreibung

Die Erfindung betrifft einen Energieabsorptionskörper, eine Vorrichtung zum Schutz gegen einen Aufprall, ein Kraftfahrzeug-Innenverkleidungsteil, insbesondere eine Instrumententafel, und einen Querträger.

Aus dem Stand der Technik sind verschiedene Energieabsorber für Kraftfahrzeuge bekannt, die bei einem Aufprall die Stoßenergie durch Deformation aufnehmen sollen.

Beispielsweise zeigt die DE 20 61 595 eine stoßabsorbierende Vorderwand. Die DE 199 52 570 zeigt einen Energieabsorber zum Absorbieren von Stoßenergie. Weitere Deformationsstrukturen zur Energieabsorption sind bekannt geworden aus DE 197 36 839 und DE 30 38 252.

Ferner ist es auch aus dem Stand der Technik bekannt, ein Aufprallschutzelement an dem Querträger eines Kraftfahrzeugs, das heißt dem sogenannten Cockpit-Querträger, zu befestigen, insbesondere aus DE 23 12 202, DE 39 05 950 A1, DE 12 39 583, US 5,273,314, US 4,978,136, US 5,037,130, US 5,482,319, DE 195 02 226, DE 20 61 595, DE 22 48 003, DE 23 35 958, DE 40 16 670 und DE 197 12 902. Aufpralldämpfer zur Querträgerversteifung sind ferner aus DE 196 25 457 und DE 196 15 875 bekannt geworden. Weitere Energieabsorber zur Anwendung in Kraftfahrzeugen sind bekannt aus DE 19952570A1, DE 19736839A1, DE 4016670A1, DE 19625457A1 und DE 19615875A1.

Die gattungsgemäße DE 30 38 252 A1 offenbart ein stoßabsorbierendes Deformationsglied für Kraftfahrzeuge, insbesondere Personenkraftwagen, das im Aufprallbereiche der Knie von Fahrer und Beifahrer sich etwa geradlinig über die gesamte Fahrzeugbreite erstreckend angeordnet, als Hohlkörper ausgebildet, bei einem durch einen Unfall verursachten Aufprall eines Insassen bleibend verformbar und an festen Fahrzeugteilen abgestützt ist.

Der Erfindung liegt dem gegenüber die Aufgabe zu Grunde, einen verbesserten Energieabsorptionskörper zu schaffen, sowie eine entsprechende Vorrichtung zum Schutz gegen Aufprall, ein Kraftfahrzeug-Innenverkleidungsteil und einen Querträger.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Durch die Erfindung wird ein Energieabsorptionskörper mit im wesentlichen in einer axialen Richtung verlaufenden Seitenelementen geschaffen. Die Seitenelemente sind nach außen gewölbt. Zwischen den Seitenelementen befindet sich zumindest ein Energieabsorptionselement. Das Energieabsorptionselement ist auf Zug belastbar. Dadurch kann das Energieabsorptionselement bei einer in der axialen Richtung auf die Seitenelemente wirkenden Kraft, die von den Seitenelementen aufgrund dieser in axialer Richtung wirkenden Kraft ausgeübte Zugkraft aufnehmen. Die Seitenelemente werden daher durch die in axialer Richtung ausgeübten Kraft, wie sie zum Beispiel bei einem Seitenaufprall auftritt, nur wenig verformt, so dass sie zu einer Vergrößerung der Steifigkeit des Kraftfahrzeugs beitragen können.

Das Energieabsorptionselement ist ferner zur Deformation bei einer in radialer Richtung auf eines der Seitenelemente ausgeübten Druckkraft ausgebildet. Eine solche Druckkraft kann zum Beispiel bei einem Frontalaufprall auftreten, wenn einer der Fahrzeuginsassen zum Beispiel im Kniebereich oder mit dem Kopf auf die Instrumententafel aufschlägt. Das Energieabsorptionselement kann aufgrund einer solchen Druckkraft kollabieren, um die Aufschlagenergie zu absorbieren und so das Verletzungsrisiko der Fahrzeuginsassen zu reduzieren.

Durch die Erfindung wird also ein Energieabsorptionskörper geschaffen, der in Abhängigkeit von der Lastsituation unterschiedliche mechanische Eigenschaften aufweist. Insbesondere kann der Energieabsorptionskörper eine orthotrope Steifigkeit aufweisen.

Bei einer Belastung in axiale Richtung trägt der Energieabsorptionskörper zur Verbesserung der Steifigkeit der Fahrgastzelle eines Kraftfahrzeugs bei, um so zum Beispiel bei einem Seitenaufprall ein Eindringen von Karosserieteilen in den Fahrzeuginnenraum zu verhindern. Wird der Energieabsorptionskörper dagegen nicht in axialer, sondern in radialer Richtung belastet, so wird der Energieabsorptionskörper deformiert. In Abhängigkeit von der Stärke des Aufpralls kann der Energieabsorptionskörper dabei kollabieren. Durch die Deformation des Energieabsorptionskörpers erfolgt eine Absorption von Stoßenergie, wenn beispielsweise bei einem Frontalaufprall ein Fahrzeuginsasse auf die Instrumententafel aufschlägt.

Nach einer Ausführungsform der Erfindung bestehen die Seitenelemente und / oder das zumindest eine Energieabsorptionselement aus einem Leichtmetall, einer Leichtmetalllegierung, insbesondere aus Aluminium oder einer Aluminiumlegierung.

Nach einer Ausführungsform der Erfindung sind die Seitenelemente konvex, zum Beispiel bogenförmig, gewölbt. Die Seitenelemente können an ihren Enden miteinander verbunden sein, um so eine Rahmenstruktur für die Aufnahme des zumindest einen Energieabsorptionselements zu bilden.

Nach einer Ausführungsform der Erfindung ist das Energieabsorptionselement wabenförmig ausgebildet.

Nach einer Ausführungsform der Erfindung hat das Energieabsorptionselement erste und zweite Krümmungen in einer ersten Richtung mit einer dazwischen liegenden dritteln Krümmung einer der ersten Richtung gegenläufigen zweiten Richtung. Die Krümmungsradien betragen jeweils vorzugsweise mindestens 1 mm, insbesondere mindestens 2,5 mm, um den Aufbau von Spannungsspitzen bei einer Belastung des Energieabsorptionselements zu verringern, und zwar bei einer Wandstärke des Energieabsorptionselements von z.B. ca. 1 mm. Ziel der Abrundung des Energieabsorptionselements, insbesondere der Wabenstruktur, ist, dass möglichst kein Brechen auftritt. Ein großer elastischer Bereich ist nicht gewünscht, dieses führt zu einem Hohen Kraftniveau, auf dem die Energie abgebaut wird und entsprechend einer hohen Belastung auf dem eindringenden Passagier. Andererseits wird Energie effektiv bei einer plastischen Deformation abgebaut. Das bedeutet, dass eher einen kleinen elastischen Bereich, und einen großen plastischen Deformationsbereich benötigt wird, bei dem viel Energie bei einem konstanten niedrigen Kraftniveau abgebaut werden kann.

Nach einer Ausführungsform der Erfindung ist der Energieabsorptionskörper zur Befestigung an einem Querträger eines Kraftfahrzeugs ausgebildet und / oder zur Befestigung an einer Instrumententafel.

Nach einer Ausführungsform der Erfindung ist der Energieabsorptionskörper zur Befestigung einer Lenksäule ausgebildet. Beispielsweise wird die Lenksäule an dem Querträger und zusätzlich an dem Energieabsorptionskörper befestigt. Dies führt zu einer verbesserten und steiferen Anbindung der Lenksäule an die Karosserie des Kraftfahrzeugs und kann zu einet Gewichtreduzierung beim Querträger führen. Die steifere Anbindung ist ferner zur Realisierung einer sogenannten direkten Lenkung für ein sportliches Fahrgefühl vorteilhaft.

Gemäß einer Ausführungsform der Erfindung ist der Energieabsorptionskörper zur Befestigung eines Handschuhkastens ausgebildet. Beispielsweise kann der Energieabsorptionskörper von einem Querträger des Kraftfahrzeugs beabstandet angeordnet sein. Der dadurch zwischen dem Querträger und dem Energieabsorptionskörper gebildete Bereich kann zur Aufnahme eines Handschuhkastens genutzt werden.

In einem weiteren Aspekt betrifft die Erfindung eine Vorrichtung zum Schutz gegen. einen Aufprall, wobei die Vorrichtung zumindest einen erfindungsgemäßen Energieabsorptionskörper aufweist.

Nach einer Ausführungsform der Erfindung hat die Vorrichtung eine Parallel- und / oder Serienanordnung der Energieabsorptionskörper. Beispielsweise sind die Energieabsorptionskörper zur Aufnahme von Seitenaufprallkräften sowie zur Energieabsorption zum Beispiel bei einem Kopf- und / oder Knieaufprall auf der Fahrer und/oder Beifahrerseite ausgebildet.

Gemäß einer Ausführungsform der Erfindung ist der Energieabsorptionskörper in Fahrtrichtung hinter der A-Säule des Kraftfahrzeugs möglichst nahe an dem Kraftfahrzeug-Innenraum angeordnet. Dies hat den Vorteil, dass das Eindringen einer Seitentür des Kraftfahrzeugs in den Kraftfahrzeug-Innenraum bei einem Seitenaufprall verhindert werden kann, und dass andererseits besonders wirksamer Schutz für die Fahrzeuginsassen bei einem Knie- und / oder Kopfaufprall infolge eines Frontalaufpralls gegeben ist.

In einem weiteren Aspekt betrifft die Erfindung ein Kraftfahrzeug-Innenverkleidungsteil, insbesondere eine Instrumententafel, die zumindest einen erfindungsgemäßen Energieabsorptionskörper beinhaltet. Bei der Instrumententafel kann es sich insbesondere auch um eine sogenannte selbsttragende Instrumententafel handeln.

In einem weiteren Aspekt betrifft die Erfindung einen Querträger für ein Kraftfahrzeug, in den ein oder mehrere der erfindungsgemäßen Energieabsorptionskörper integriert sind.

Im weiteren werden Ausführungsformen der Erfindung mit Bezugnahme auf die Zeichnung näher erläutert. Es zeigen:
- Figur 1: eine Draufsicht einer Ausführungsform eines erfindungsgemäßen Energieabsorptionskörpers in unbelastetem Zustand,
- Figur 2: den Energieabsorptionskörper der Figur 1 bei einer in axialer Richtung wirkenden Kraft,
- Figur 3: den Energieabsorptionskörper der Figur 1 bei einer in radialer Richtung auf den Energieabsorptionskörper wirkenden Druckkraft,
- Figur 4: einen Querträger mit einem Energieabsorptionskörper,
- Figur 5: einen zwischen zwei Säulen eines Kraftfahrzeugs angeordneten Querträger mit einem integrierten Energieabsorptionskörper,
- Figur 6: einen zwischen den Säulen eines Kraftfahrzeugs angeordneten Querträger mit zwei in dem Querträger seriell integrierten Energieabsorptionskörpern,
- Figur 7: eine parallele Anordnung von zwei Energieabsorptionskörpern,
- Figur 8: eine schematische Draufsicht auf eine Instrumententafel mit im Bereich der Kraftfahrzeug-Säule und der Seitentür angeordneten Energieabsorptionskörpern,
- Figur 9: eine schematische Draufsicht auf eine Ausführungsform der Instrumententafel mit einem Kraftübertragungselement zur Übertragung einer Seitenaufprallkraft von der A-Säule zu dem Energieabsorptionskörper,
- Figur 10: eine perspektivische Ansicht einer Instrumententafel mit mehreren Energieabsorptionskörpern,
- Figur 11: eine perspektivische Ansicht einer erfindungsgemäßen Vorrichtung zum Schutz gegen einen Aufprall mit einem Querträger und zwei an dem Querträger angeordneten Energieabsorptionskörpern,
- Figur 12: eine perspektivische Teilansicht einer Instrumententafel mit einer an dem Energieabsorptionskörper befestigten Lenksäule.

Elemente der nachfolgenden Figuren, die einander entsprechen, sind mit denselben Bezugszeichen gekennzeichnet.

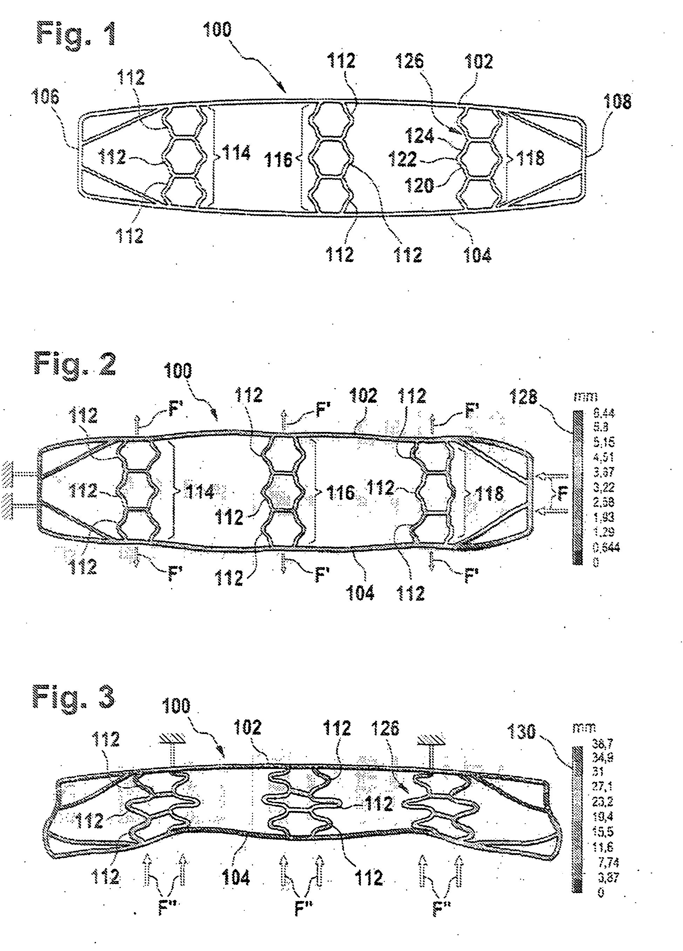

Die Figur 1 zeigt einen Energieabsorptionskörper 100. Der Energieabsorptionskörper hat zwei einander gegenüberliegende Seitenelemente 102 und 104, die jeweils konvex nach außen gewölbt sind. An ihren Enden sind die Seitenelemente 102 und 104 miteinander verbunden, so dass die Stirnseiten 106 bzw. 108 gebildet werden. Durch die Seitenelemente 102, 104 und die Stirnseiten 106, 108 wird also insgesamt ein länglicher Rahmen gebildet, dessen Seitenelemente 102, 104 in etwa bogenförmig sind.

Im Inneren des Rahmens befinden sich Energieabsorptionselemente 112, die in der hier betrachteten Ausführungsform jeweils wabenförmig ausgebildet sind.

Durch jeweils drei seriell angeordnete Energieabsorptionskörper werden Verbindungen 114, 116 und 118 zwischen den Seitenelementen 102 und 104 innerhalb des Rahmens gebildet. Diese Verbindungen 114, 116 und 118 sind jeweils auf Zug belastbar, wie in der Figur 2 dargestellt, und aufgrund einer auf die Seitenelemente 102 oder 104 wirkenden Druckkraft deformierbar, wie in der Figur 3 dargestellt.

In der hier betrachteten Ausführungsform hat jedes der Energieabsorptionselemente 112 in Richtung von einem der Seitenelemente auf das andere eine Abfolge von drei Krümmungsradien 120, 122 und 124, und zwar auf jeder der Wabenseiten. Wenn man zum Beispiel eine linke Wabenseite 126 betrachtet, folgt - in Richtung von dem Seitenelement 104 zu dem Seitenelemente 102 - auf einen links gekrümmten Bereich der Wabenseite, der den Krümmungsradius 120 aufweist, ein rechts gekrümmter Bereich mit dem Krümmungsradius 122, auf den wiederum ein rechts gekrümmter Bereich mit dem Krümmungsradius 124 folgt. Die Krümmungsradien 120, 122 und 124 sind dabei relativ groß, um den Aufbau von Spannungsspitzen zu reduzieren. Beispielsweise sind die Krümmungsradien 120, 122, 124 größer als 1 mm.

Die Figur 2 zeigt den Energieabsorptionskörper 100 bei Beaufschlagung mit einer in dessen axialer Richtung wirkenden Kraft F, wie sie zum Beispiel bei einem Seitenaufprall auf den Energieabsorptionskörper 100 wirken kann. Durch die Kraft F werden die bogenförmigen Seitenelemente 102 und 104 jeweils nach außen, das heißt auseinander gedrückt, was Zugkräfte F' auf die die Verbindungen 114, 116 und 118 bildenden Energieabsorptionselemente 112 zur Folge hat. Diese Zugkräfte F' werden durch die Energieabsorptionselemente 112 aufgenommen, so dass die Seitenelemente 102 und 104 zusammen gehalten werden. Aufgrund dessen unterliegt der Energieabsorptionskörper 100 auch bei einer sehr großen Kraft F nur einer geringen Deformation, wie in der Figur 2 grauwert-codiert dargestellt. Die einzelnen Grauwerte der Darstellung des Energieabsorptionskörpers 100 entsprechen Verformungen in mm, wie auf der Skala 128 der Figur 2 gezeigt. Die maximale Verformung beträgt 6,44 mm.

Die Figur 3 zeigt eine entsprechende Darstellung des Energieabsorptionskörpers 100, wenn eine Druckkraft F" auf das Seitenelement 104 wirkt. Die Druckkraft F" wirkt beispielsweise flächig auf das Seitenelement 104, wenn im Falle eines Frontalaufpralls ein Fahrzeuginsasse beispielsweise mit seinen Knien aufschlägt. Aufgrund der Druckkraft F" werden die Energieabsorptionselemente 112 deformiert und kollabieren teilweise. Die Verformung in mm ist wiederum Grauwert-codiert dargestellt und der Figur 3 mit Hilfe der Skala 130 entnehmbar. Die maximale Verformung beträgt bei dieser Belastung 38.7 mm.

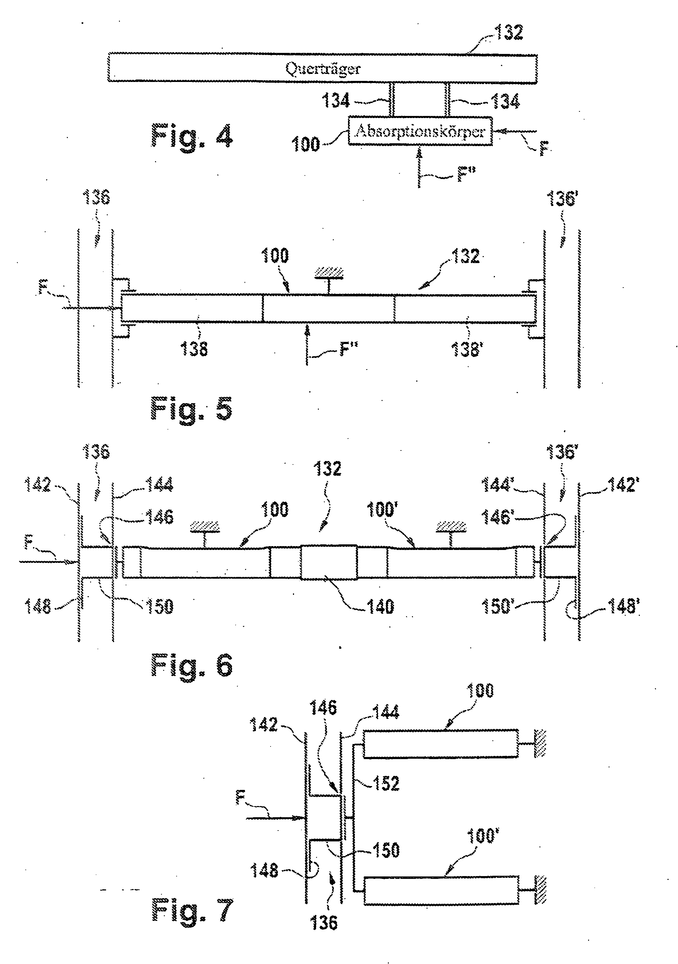

Die Figur 4 zeigt einen Querträger 132 eines Kraftfahrzeugs, der zum Beispiel unterhalb einer Instrumententafel verläuft. Ein Energieabsorptionskörper 100 ist durch Metalllaschen 134 an dem Querträger 132 abgestützt. Bei einem Seitenaufprall wird dadurch die Steifigkeit der Karosserie erhöht, so dass die Kraft F besser aufgenommen werden kann, ohne dass die Fahrgastzelle zerstört wird; dagegen kann bei einem Frontalaufprall die Aufprallkraft eines Fahrzeuginsassen, das heißt die Druckkraft F", durch Deformation des Energieabsorptionskörpers 100 aufgenommen werden, um das Verletzungsrisiko für den Fahrzeuginsassen zu minimieren.

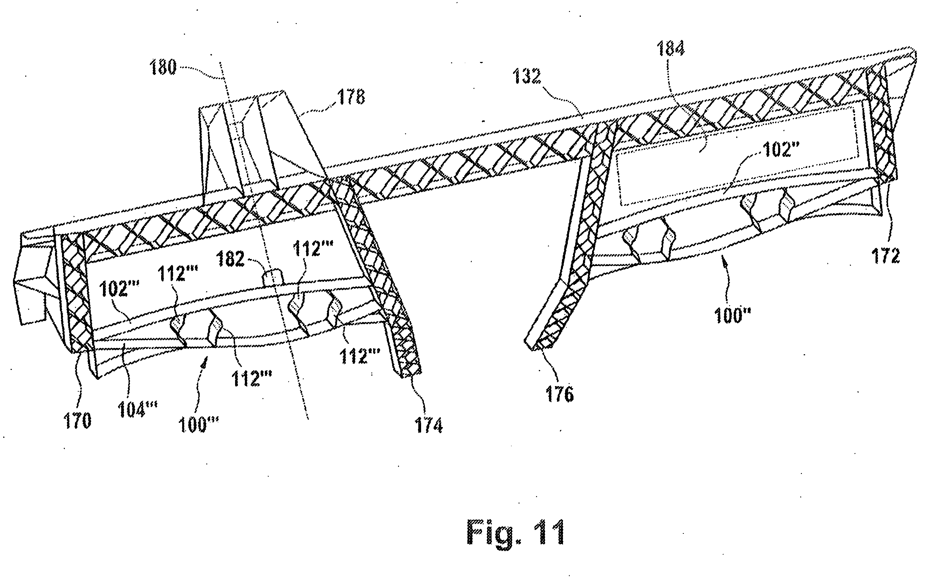

Vorzugsweise ist links von dem Energieabsorptionskörper 100 ein Fixierungsmittel zur Fixierung z.B. am Mitteltunnel angeordnet (vgl. Fig. 11, Streben 174, 176).

Die Figur 5 zeigt eine Ausführungsform eines Querträgers 132, der zwischen den beiden so genannten A-Säulen 136 und 136' eines Kraftfahrzeugs angeordnet ist. Der Querträger 132 hat zwei äußere Abschnitte 138 und 138', die als einander gegenüberliegende Kraftübertragungselemente auf den dazwischen befindlichen Energieabsorptionskörper 100 dienen können. Wenn zum Beispiel aufgrund eines Seitenaufpralls die Kraft F von der A-Säule 136 auf den Abschnitt 138 wirkt, so erhöht sich die Steifigkeit des Energieabsorptionskörpers 100 und damit die Gesamtsteifigkeit des Querträgers 132. Aufgrund der erhöhten Steifigkeit des Querträgers 132 kann verhindert werden, dass zum Beispiel die A-Säule 136 in die Fahrgastzelle eindringt. Wirkt dagegen zum Beispiel bei einem Frontalaufprall die Kraft F" auf den Energieabsorptionskörper 100, so nimmt dieser aufgrund seiner Deformation Stoßenergie auf.

Die Figur 6 zeigt eine Ausführungsform des Querträgers 132 mit zwei in Serie angeordneten Energieabsorptionskörpern 100 und 100'. Die beiden Energieabsorptionskörper 100 und 100' werden durch ein Verbindungselement 140 miteinander verbunden.

Jede der A-Säulen 136 und 136' hat ein Außenblech 142 bzw. 142' und ein Innenblech 144 bzw. 144'. Die Innenbleche 144 und 144' haben jeweils eine Öffnung 146 bzw. 146'. Die Öffnungen 146, 146' können vor einem Aufprall geschlossen oder geöffnet sein. Beispielsweise können die Öffnungen 146, 146' durch jeweils eine Sollbruchstelle definiert sein, die bei einem Seitenaufprall aufgetrennt wird, um so die jeweilige Öffnung 146, 146' freizugeben. Die Öffnungen 146, 146' können auch jeweils durch eine Verschlusskappe oder ein anderes Dekorelement überdeckt sein, welches im Falle eines Aufpralls von der jeweiligen Öffnung abgelöst oder von einem Kraftübertragungselement 148 bzw. 148' durchstoßen wird.

Die Kraftübertragungselemente 148 bzw. 148' sind jeweils an der Innenseite der Außenbleche 142 bzw. 142' angeordnet. Die Kraftübertragungselemente 148 und 148' haben jeweils einen Bereich 150 bzw. 150', der in Richtung der jeweiligen Öffnung 146 bzw. 146' ragt. In der hier betrachteten Ausführungsform haben die Bereiche 150 und 150' jeweils ein U-förmiges Profil.

Bei einem Aufprall auf eine der A-Säulen 136, 136' wird das Außenblech der betreffenden A-Säule deformiert. Dabei wirkt die Aufprallkraft F in einer axialen Richtung. Hierdurch wird beispielsweise bei einem Aufprall auf die A-Säule 136 der Bereich 150 durch die Öffnung 146 in dem Innenblech 144 hindurchgedrückt, so dass die Aufprallkraft F auf die Serienanordnung der Energieabsorptionskörper 100 und 100' wirkt.

Besonders vorteilhaft ist dabei, dass der Deformationsweg des Außenblechs in Richtung auf das Innenblech genutzt wird, um die Aufprallkraft F auf die Energieabsorptionskörper 100, 100' zu übertragen, so dass die Steifigkeit der Fahrgastzelle erhöht werden kann.

Die Figur 7 zeigt eine alternative Ausführungsform mit einer parallelen Anordnung der Energieabsorptionskörper 100, 100'. Bei dieser Ausführungsform dient ein weiteres Kraftübertragungselement 152 zur Übertragung der Kraft F auf die parallel angeordneten Energieabsorptionskörper 100, 100'. Hierzu wirkt das Kraftübertragungselement 148 bei einem Seitenaufprall auf das Kraftübertragungselement 152, welches mit den Energieabsorptionskörpern 100, 100' verbunden ist.

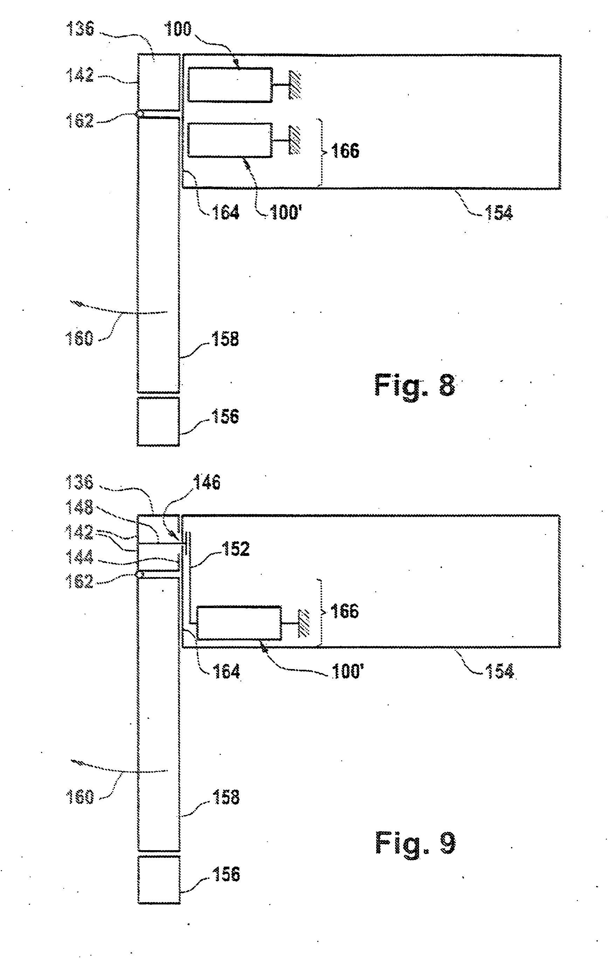

Die Figur 8 zeigt eine schematische Draufsicht auf eine Instrumententafel 154. Auf Höhe der A-Säule 136 befindet sich in Fahrtrichtung ein erster Energieabsorptionskörper 100. Zwischen der A-Säule 136 und der B-Säule 156 des Kraftfahrzeugs ist eine Kraftfahrzeug-Tür 158 angeordnet, die in Pfeilrichtung 160 um deren Schwenkachse 162 aufschwenkbar ist.

Wenn die Kraftfahrzeug-Tür 158 geschlossen ist, bildet sie mit einer Seitenwand 164 der Instrumententafel 154 einen Überlappungsbereich 166. In diesem Überlappungsbereich 166 ist ein weiterer Energieabsorptionskörper 100' angeordnet.

Der Energieabsorptionskörper 100 verläuft also in axialer Richtung auf die A-Säule 136 zu, wohingegen der Energieabsorptionskörper 100' in axialer Richtung auf die Kraftfahrzeug-Tür zu verläuft.

Der weitere Energieabsorptionskörper 100' ist besonderes vorteilhaft, da er einerseits in dem Überlappungsbereich 166 der Instrumententafel mit der Kraftfahrzeug-Tür 158 angeordnet ist, so dass er ein Eindringen der Kraftfahrzeug-Tür 158 bei einem Seitenaufprall auf die Kraftfahrzeug-Tür 158 in den Fahrzeuginnenraum verhindern kann, und andererseits da er in der Nähe der Sitzposition des Fahrers des Kraftfahrzeugs angeordnet ist, so dass hierdurch bei einem Frontalaufprall ein besonders wirksamer Aufprallschutz für den Fahrer gegeben ist.

Eine entsprechende Anordnung von Energieabsorptionskörpern kann auch auf der in der Figur 8 nicht gezeigten Beifahrerseite des Kraftfahrzeugs realisiert sein.

Die Figur 9 zeigt eine Variante der Ausführungsform der Figur 8, bei der der Energieabsorptionskörper 100' über ein winkeliges Kraftübertragungselement 152 von dem Kraftübertragungselement 148 mit einer Seitenaufprallkraft beaufschlagt werden kann. Diese Ausführungsform ist besonderes vorteilhaft, da der Energieabsorptionskörper 100' gegenüber einer Seite der Kraftfahrzeug-Tür 158 angeordnet ist, und zwar im Überlappungsbereich 166 der Seite der Kraftfahrzeug-Tür 158 mit der Seitenwand 164 der Instrumententafel 154. Dies führt im Falle eines Seitenaufpralls auf die A-Säule 136 und / oder auf die Kraftfahrzeug-Tür 158 zu einer Versteifung, die ein Eindringen der Kraftfahrzeug-Tür 158 in den Kraftfahrzeug-Innenraum verhindern oder reduzieren kann.

Zusätzlich zu dem Energieabsorptionskörper 100' können weitere Energieabsorptionskörper auf der Fahrer- und / oder der Beifahrerseite angeordnet sein.

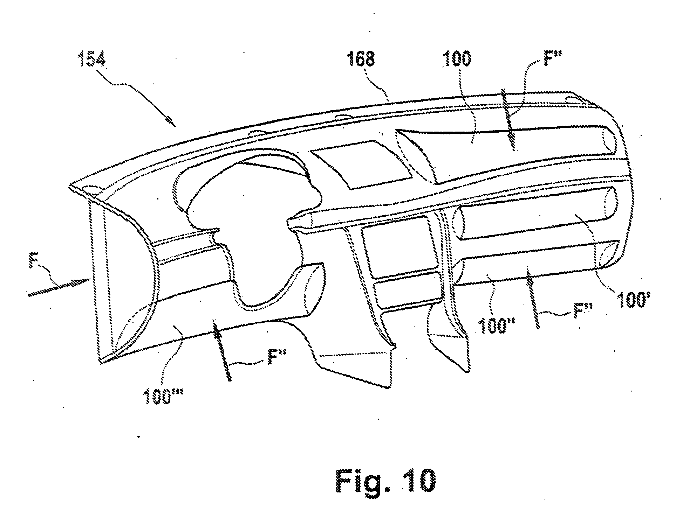

Die Figur 10 zeigt eine Instrumententafel 154 in perspektivischer Ansicht. Die Instrumententafel 154 kann einen oder mehrere erfindungsgemäße Energieabsorptionskörper aufweisen. Beispielsweise ist ein Energieabsorptionskörper 100 in einem Beifahrer-Kopfaufschlagbereich angeordnet, zwei Energieabsorptionskörper 100' und 100" im Beifahrer-Knieaufschlagsbereich und ein Energieabsorptionskörper 100"' im Fahrer-Knieaufschlagsbereich. Die Energieabsorptionskörper 100, 100', 100", 100"' sind jeweils axial in etwa senkrecht zur Fahrtrichtung des Kraftfahrzeugs ausgerichtet, so dass sie bei einem Seitenaufprall, wenn beispielsweise die Kraft F auf das Kraftfahrzeug wirkt, zu einer Versteifung der Fahrgastzelle beitragen. Bei einem Frontalaufprall können die Energieabsorptionskörper 100, 100', 100", 100"' dagegen zur Absorption von Aufprallenergie der Fahrzeuginsassen, zum Beispiel auf dem Kopf- oder Knieaufschlagsbereich dienen.

Das Kraftfahrzeug kann einen Querträger (vgl. Querträger 132 der Figuren 4 bis 6) aufweisen; die Instrumententafel 154 kann auch als sogenannte selbsttragende Instrumententafel ausgebildet sein. Beispielsweise hat die Instrumententafel 154 eine Trägerschicht aus ABS oder einem anderen Kunststoff.

Wenn es sich um eine selbsttragende Instrumententafel handelt, besteht die Trägerschicht vorzugsweise aus Polypropilene mit einem relativ hohen Glasfasergehalt (um die 30 %) oder aus einem Blend von Styrol / Maleinsäureanhydrid (SMA) und Acrylnitril-Butadien-Styrol-Copolymerisat (ABS). In diesem Fall ist ein durchgehender Querträger nicht erforderlich.

Zwischen der Windschutzscheibenwurzel 168 und dem in dem Kopfaufschlagbereich angeordnetem Energieabsorptionskörper 100 kann ein Beifahrer-Airbag angeordnet sein, wie zum Beispiel ein sogenannter windschutzscheibennaher Airbag, dessen Öffnungsklappe bei der Auslösung des Airbags gegen die Windschutzscheibe anschlägt.

Die Figur 11 zeigt eine Ausführungsform des Querträgers 132. An den Enden des Querträgers 132 sind jeweils Streben 170 und 172 angeordnet. In seinem mittleren Bereich hat der Querträger 132 zwei Streben 174 und 176 zur Anbindung an den sogenannten Mitteltunnel und / oder den Fahrzeugboden des Kraftfahrzeugs.

Zwischen der Strebe 170 und der Strebe 174 ist der Energieabsorptionskörper 100"' (vgl. Figur 10) angeordnet. Zwischen den Seitenelementen 102"' und 104"' des Energieabsorptionskörpers 100"' sind bei dieser Ausführungsform vier Energieabsorptionselemente 112"' angeordnet, die jeweils die gegenüberliegenden Seitenelemente 102"' und 104"' miteinander verbinden. Jedes der Energieabsorptionselemente 112"' hat drei aufeinander folgende Krümmungsradien alternierender Krümmungsrichtung, wie das auch bei der Ausführungsform der Figur 1 der Fall ist (vgl. Krümmungsradien 120, 122, 124).

Auf der Beifahrerseite ist zwischen den Streben 172 und 176 ein entsprechender Energieabsorptionskörper 100" angeordnet, der prinzipiell gleich aufgebaut ist, wie der Energieabsorptionskörper 100"'.

Die Energieabsorptionskörper 100"' und 100" sind zwischen den Streben 170 und 174 bzw. zwischen den Streben 172 und 176 jeweils beabstandet von dem Querträger 132 angeordnet.

An dem Querträger 132 ist eine Halterung 178 für eine Lenksäule 180 angeordnet. Das Seitenelement 102" ist zur Ausbildung einer weiteren Halterung 182 der Lenksäule 180 ausgebildet. Dadurch wird eine weitere Lenkungsanbindung der Lenksäule an die Karosserie des Kraftfahrzeugs geschaffen. Für die Halterung 182 ist vorteilhaft, wenn zwei Anbindungspunkte zwischen Lenkung und Energieabsorptionskörper 100"' vorgesehen werden. Diese können symmetrisch zur Lenksäulenachse angeordnet werden.

Der zwischen dem Querträger 132 und dem beifahrerseitig angeordneten Energieabsorptionskörper 100" gebildete Zwischenraum kann für die Anordnung eines Staufachs, insbesondere eines Handschuhkastens 184 genutzt werden. Beispielsweise kann der Handschuhkasten 184 an dem Seitenelement 102" befestigt werden oder darauf aufliegen.

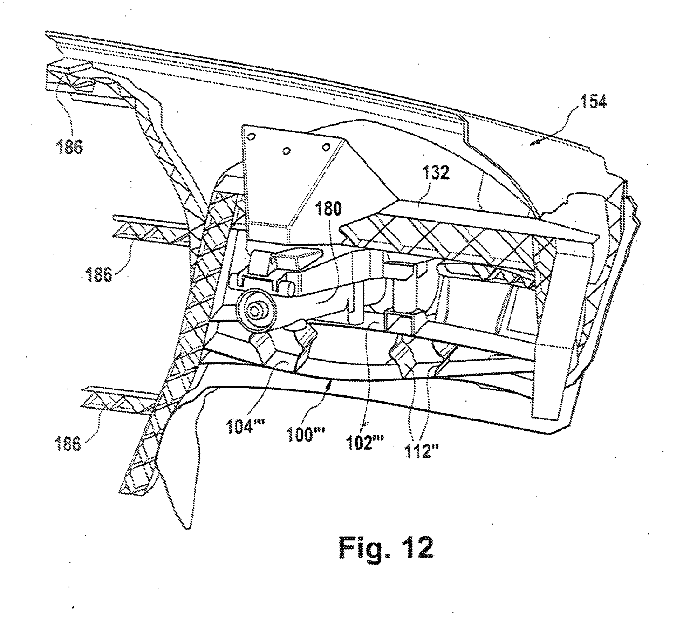

Die Figur 12 zeigt eine fahrerseitige perspektivische Teilansicht einer Ausführungsform der Instrumententafel 154. Bei dieser Ausführungsform der Instrumententafel 154 handelt es sich um eine sogenannte selbsttragende Instrumententafel, für die kein durchgehender Querträger erforderlich ist. Der Querträger 132 erstreckt sich hier nur über die Fahrerseite, während die selbsttragende Funktion der Instrumententafel 154 ansonsten durch Versteifungsrippen 186 auf der Unterseite der Instrumententafel 154 gewährleistet wird.

Wie in der Ausführungsform der Figur 11 ist die Lenksäule 180 sowohl an dem Querträger 132 als auch an dem Seitenelement 102"' des Energieabsorptionskörper 100"' angebunden.

### Bezugszeichenliste

- 100: Energieabsorptionskörper
- 100': Energieabsorptionskörper
- 100": Energieabsorptionskörper
- 100"': Energieabsorptionskörper
- 102: Seitenelement
- 102": Seitenelement
- 102"': Seitenelement
- 104: Seitenelement
- 104"': Seitenelement
- 106: Stirnseite
- 108: Stirnseite
- 112: Energieabsorptionselement
- 114: Verbindung
- 116: Verbindung
- 118: Verbindung
- 120: Krümmungsradius
- 122: Krümmungsradius
- 124: Krümmungsradius
- 126: Wabenseite
- 128: Skala
- 130: Skala
- 132: Querträger
- 134: Metalllasche
- 136: A-Säule
- 136': A-Säule
- 138: Abschnitt
- 138': Abschnitt
- 140: Verbindungselement
- 142: Außenblech
- 142': Außenblech
- 144: Innenblech
- 144': Innenblech
- 146: Öffnung
- 146': Öffnung
- 148: Kraftübertragungselement
- 148': Kraftübertragungselement
- 150: Bereich
- 150': Bereich
- 152: Kraftübertragungselement
- 154: Instrumententafel
- 156: B-Säule
- 158: Kraftfahrzeug-Tür
- 160: Pfeilrichtung
- 162: Schwenkachse
- 164: Seitenwand
- 166: Überlappungsbereich
- 168: Windschutzscheibenwurzel
- 170: Strebe
- 172: Strebe
- 174: Strebe
- 176: Strebe
- 178: Halterung
- 180: Lenksäule
- 182: Halterung
- 184: Handschuhkasten
- 186: Versteifungsrippen

## Patentansprüche

1. Energieabsorptionskörper mit im wesentlichen in einer axialen Richtung verlaufenden Seitenelementen (102, 104), wobei die Seitenelemente nach außen gewölbt sind, und mit zumindest einem Energieabsorptionselement (112), wobei das zumindest eine Energieabsorptionselement zwischen den Seitenelementen angeordnet ist, und wobei das zumindest eine Energieabsorptionselement zur Deformation bei einer in radialer Richtung auf eines der Seitenelemente ausgeübten Druckkraft (F") ausgebildet ist, wobei das zumindest eine Energieabsorptionselement erste (120) und zweite Krümmungen (124) in einer ersten Richtung und eine zwischen den ersten und zweiten Krümmungen befindliche dritte Krümmung (122) in einer zu der ersten Richtung gegenläufigen zweiten Richtung aufweist, **dadurch gekennzeichnet, dass** das zumindest eine Energieabsorptionselement wabenförmig ausgebildet ist und dass das zumindest eine Energieabsorptionselement die Seitenelemente miteinander verbindet, wobei das zumindest eine Energieabsorptionselement zur Aufnahme einer von den Seitenelementen auf das zumindest eine Energieabsorptionselement ausübbaren Zugkraft (F') ausgebildet ist.

2. Energieabsorptionskörper nach Anspruch 1, wobei die Seitenelemente konvex gewölbt sind.

3. Energieabsorptionskörper nach Anspruch 1 oder 2, wobei sich die dritte Krümmung in etwa in der Mitte des zumindest einen Energieabsorptionselements befindet.

4. Energieabsorptionskörper nach einem der vorhergehenden Ansprüche, wobei eines oder mehrere der Energieabsorptionselemente (112) die Seitenelemente miteinander verbindet (114, 116, 118).

5. Vorrichtung zum Schutz gegen einen Aufprall mit zumindest einem Energieabsorptionskörper (100, 100', 100", 100"') nach einem der vorhergehenden Ansprüche.

6. Vorrichtung nach Anspruch 5, wobei der Energieabsorptionskörper an einem Querträger (132) der Vorrichtung befestigt oder in den Querträger integriert ist.

7. Vorrichtung nach Anspruch 5 oder 6, mit einer Lenksäule (180), die an einem Querträger (132) und an dem Energieabsorptionskörper befestigt ist.

8. Vorrichtung nach einem der vorhergehenden Ansprüche 5 bis 7, wobei der Energieabsorptionskörper von einem Querträger (132) beabstandet angeordnet ist, und mit einem in dem von dem Querträger und dem Energieabsorptionskörper gebildeten Zwischenraum befestigten Staufach (184).

9. Vorrichtung nach einem der vorhergehenden Ansprüche 5 bis 8, wobei der Energieabsorptionskörper in einem Überlappungsbereich (166) einer Tür mit einer Seitenwand (164) einer Instrumententafel (154) angeordnet ist.

10. Vorrichtung nach Anspruch 9, mit einem Kraftübertragungselement (148, 148') zur Übertragung einer in die axiale Richtung wirkenden Kraft (F) von einer A-Säule (136, 136') zu dem Energieabsorptionskörper.

11. Vorrichtung nach einem der vorhergehenden Ansprüche 5 bis 10, wobei der Energieabsorptionskörper als Knieaufprallschutz oder als Kopfaufprallschutz ausgebildet ist.

12. Vorrichtung nach einem der vorhergehenden Ansprüche 5 bis 11, wobei es sich um ein Kraftfahrzeug-Innenverkleidungsteil, handelt.

13. Vorrichtung nach Anspruch 12, wobei es sich um eine Instrumententafel handelt.

14. Vorrichtung nach Anspruch 13, wobei die Instrumententafel selbsttragend ist.

15. Querträger mit zumindest einem Energieabsorptionskörper nach einem der vorhergehenden Ansprüche 1 bis 4.

## Claims

1. Energy-absorption body with side elements (102, 104) running substantially in an axial direction, wherein the side elements are curved outwards, and with at least one energy-absorption element (112), wherein the at least one energy-absorption element is arranged between the side elements, and wherein the at least one energy-absorption element is designed for deformation in the event of a compressive force (F") exerted in the radial direction on one of the side elements, wherein the at least one energy-absorption element has first curvatures (120) and second curvatures (124) in a first direction and a third curvature (122), which is located between the first and second curvatures, in a second direction opposed to the first direction, **characterized in that** the at least one energy-absorption element is of honeycomb-shaped design, and **in that** the at least one energy-absorption element connects the side elements to one another, wherein the at least one energy-absorption element is designed for absorbing a tensile force (F') which can be exerted on the at least one energy-absorption element by the side elements.

2. Energy-absorption body according to Claim 1, wherein the side elements are curved convexly.

3. Energy-absorption body according to Claim 1 or 2, wherein the third curvature is located approximately in the centre of the at least one energy-absorption element.

4. Energy-absorption body according to one of the preceding claims, wherein one or more of the energy-absorption elements (112) connect(s) (114, 116, 118) the side elements to one another.

5. Device for protecting against an impact, with at least one energy-absorption body (100, 100', 100", 100"') according to one of the preceding claims.

6. Device according to Claim 5, wherein the energy-absorption body is fastened to a crossmember (132) of the device or is integrated in the crossmember.

7. Device according to Claim 5 or 6, with a steering column (180) which is fastened to a crossmember (132) and to the energy-absorption body.

8. Device according to one of the preceding Claims 5 to 7, wherein the energy-absorption body is arranged at a distance from a crossmember (132), and with a storage compartment (184) which is fastened in the intermediate space formed by the crossmember and the energy-absorption body.

9. Device according to one of the preceding Claims 5 to 8, wherein the energy-absorption body is arranged in an overlapping region (166) of a door with a side wall (164) of an instrument panel (154).

10. Device according to Claim 9, with a force transmission element (148, 148') for transmitting a force (F), which acts in the axial direction, from an A pillar (136, 136') to the energy-absorption body.

11. Device according to one of the preceding Claims 5 to 10, wherein the energy-absorption body is designed as a knee impact protection means or as a head impact protection means.

12. Device according to one of the preceding Claims 5 to 11, wherein a motor vehicle inner panelling component is involved.

13. Device according to Claim 12, wherein an instrument panel is involved.

14. Device according to Claim 13, wherein the instrument panel is self-supporting.

15. Crossmember with at least one energy-absorption body according to one of the preceding Claims 1 to 4.

## Revendications

1. Corps d'absorption d'énergie comprenant des éléments latéraux (102, 104) s'étendant essentiellement dans une direction axiale, les éléments latéraux étant courbés vers l'extérieur, et au moins un élément d'absorption d'énergie (112), l'au moins un élément d'absorption d'énergie étant disposé entre les éléments latéraux , et l'au moins un élément d'absorption d'énergie étant réalisé pour se déformer dans le cas d'une force de pression (F") exercée dans la direction radiale sur l'un des éléments latéraux, l'au moins un élément d'absorption d'énergie présentant des première (120) et deuxième (124) courbures dans une première direction et une troisième courbure (122) se trouvant entre les première et deuxième courbures dans une deuxième direction opposée à la première direction, **caractérisé en ce que** l'au moins un élément d'absorption d'énergie est réalisé en forme de nid d'abeilles et **en ce que** l'au moins un élément d'absorption d'énergie relie entre eux les éléments latéraux, et l'au moins un élément d'absorption d'énergie étant réalisé pour recevoir une force de traction (F') pouvant être exercée par les éléments latéraux sur l'au moins un élément d'absorption d'énergie.

2. Corps d'absorption d'énergie selon la revendication 1, dans lequel les éléments latéraux ont une courbure convexe.

3. Corps d'absorption d'énergie selon la revendication 1 ou 2, dans lequel la troisième courbure se trouve approximativement au milieu de l'au moins un élément d'absorption d'énergie.

4. Corps d'absorption d'énergie selon l'une quelconque des revendications précédentes, dans lequel un ou plusieurs des éléments d'absorption d'énergie (112) relie entre eux les éléments latéraux (114, 116, 118).

5. Dispositif pour la protection contre une collision comprenant au moins un corps d'absorption d'énergie (100, 100', 100", 100"') selon l'une quelconque des revendications précédentes.

6. Dispositif selon la revendication 5, dans lequel le corps d'absorption d'énergie est fixé sur un support transversal (132) du dispositif ou est intégré dans le support transversal.

7. Dispositif selon la revendication 5 ou 6, comprenant une colonne de direction (180) qui est fixée sur un support transversal (132) et sur le corps d'absorption d'énergie.

8. Dispositif selon l'une quelconque des revendications 5 à 7, dans lequel le corps d'absorption d'énergie est disposé à distance d'un support transversal (132) et comprenant un compartiment de rangement (184) fixé dans l'espace intermédiaire formé par le support transversal et le corps d'absorption d'énergie.

9. Dispositif selon l'une quelconque des revendications précédentes 5 à 8, dans lequel le corps d'absorption d'énergie est disposé dans une région de chevauchement (166) d'une porte avec une paroi latérale (164) d'un tableau de bord (154).

10. Dispositif selon la revendication 9, comprenant un élément de transfert de force (148, 148') pour le transfert d'une force (F) agissant dans la direction axiale d'une colonne A (136, 136') au corps d'absorption d'énergie.

11. Dispositif selon l'une quelconque des revendications précédentes 5 à 10, dans lequel le corps d'absorption d'énergie est réalisé sous forme de protection des genoux contre les impacts ou sous forme de protection de la tête contre les impacts.

12. Dispositif selon l'une quelconque des revendications précédentes 5 à 11, qui est une partie d'habillage interne du véhicule automobile.

13. Dispositif selon la revendication 12, qui est un tableau de bord.

14. Dispositif selon la revendication 13, dans lequel le tableau de bord est autoportant.

15. Support transversal comprenant au moins un corps d'absorption d'énergie selon l'une quelconque des revendications précédentes 1 à 4.
